# EUROPEAN PATENT APPLICATION

(11) **EP 4 215 090 A1**
(43) Date of publication of application: **26.07.2023**
(21) Application number: 23153175.7
(22) Date of filing: 24.01.2023
(51) Int. Cl.: A47J 31/06, A47J 31/52

(54) **AN AUTOMATIC TEA BREWING MACHINE**

(30) Priority: 25.01.2022 US 202263302584 P
(71) Applicant: Dostea Holdings Limited, Harrow HA1 2BU (GB)
(72) Inventor: Lotia, Vinit, Harrow, HA1 2BU (GB); Manji, Mitul Mavji, London, N11 3HY (GB); Mirza, Muhammad Fazal, Surbiton, KT6 7JS (GB); Nagarajarao Jyothigowdanapura, Vyasateja, 560078 Bangalore (IN); Murugan, Arun Kumar, 600042 Chennai (IN); Ramesh Kariparambil, Anil, 682013 Ernakulam (IN)
(74) Representative: JD&P Patent Attorneys Joanna Dargiewicz & Partners

(57) **Abstract**

An automatic tea brewing machine is described which comprises of a user interface panel to receive a user input, a pumping unit to pump at least one of milk and water based on the received user input, a pod breaking unit that comprises a pod filled with tea powder, such bottom of the pod is designed to break based on a threshold pressure corresponding to an amount of water that gets filled in the pod and a carafe that receives the water and the tea powder from the pod when the pod breaks. The automatic tea brewing machine also includes an inductive heating unit to provide inductive heat to the carafe and an infusion mesh to hold the tea powder in contact with the at least one of the milk and water.

## Description

### CROSS-REFERENCE TO RELATED APPLICATIONS

This application claims priority to U.S. Provisional Application No. 63/302584, entitled "AN AUTOMATIC TEA BREWING MACHINE", filed on January 25, 2022 assigned to the assignee hereof, and expressly incorporated herein by reference.

### TECHNICAL FIELD

The embodiment herein generally relates to a process automation. Particularly, the present invention provides an automatic tea brewing machine.

### BACKGROUND AND PRIOR ART

In a traditional method, tea is brewed in an open flame heating, where a tea decoction is prepared using a tea powder/leaves. Further, the tea decoction preparation requires a filtering process. In this way, heat energy is utilised in an inefficient manner and also poses safety risks. There is also the risk of the tea boiling over without human intervention which poses additional safety risks as well as can result in additional cleaning. Coffee is not typically brewed, and instead is made by passing hot water through ground coffee beans.

Conventional tea brewing machines have limited areas of automation and requires human intervention for some process. In addition, aroma of the tea powder cannot be preserved within a respective storage of the conventional tea brewing machines. Further, there are possibilities of clogs and other frequent breakdowns in the conventional tea brewing machines, due to a backflow of milk and water. Additionally, conventional tea brewing machines do not brew the milk with the tea and water, instead, the tea and water are brewed first and then the milk is added separately at the end.

In addition, control over a volume of the milk and water in a tea cannot be adjusted in the conventional tea brewing machines. For the preparation of all other beverages, human intervention is required. Moreover, the conventional tea brewing machines do not have a good appeal in a user's home environment, because of an external milk container, a water inlet and other waste discharge pipes. Conventional tea brewing machines do not have an internal milk container due to risk of residual milk being left in the system and spoiling over time.

Therefore, there is a need for an automatic tea brewing machine having good aesthetics, brewing milk, water and tea together to resemble the traditional method, while preserving the aroma and taste of the tea without a human intervention. There is also a need for an automatic tea brewing machine which does not currently exist.

### SUMMARY OF THE INVENTION

It is an object of the present disclosure to mitigate, alleviate or eliminate one or more of the above-identified deficiencies and disadvantages in the prior art and solve at least the above-mentioned problem.

In view of the foregoing, an embodiment herein provides a first aspect of an automatic tea brewing machine, a second aspect of a method of automatic tea brewing, and a third aspect of an automatic tea brewing system.

According to the first aspect of an embodiment, this disclosure describes the automatic tea brewing machine, comprises a user interface panel configured to receive a user input; a pumping unit configured to pump at least one of milk and water based on the received user input; a pod breaking unit that comprises a pod filled with tea powder, wherein bottom of the pod is designed to break based on a threshold pressure corresponding to an amount of water that gets filled in the pod; and a carafe configured to receive the water and the tea powder from the pod when the pod breaks, wherein the carafe has ferromagnetic bottom; an inductive heating unit configured to provide inductive heat to the carafe; an infusion mesh configured to hold the tea powder in contact with the at least one of the milk and water; and a control unit configured to control the inductive heating unit to steep the tea powder, holded by the infusion mesh, and the at least one of milk and water for a steeping time based on the received user input.

According to the first aspect of an embodiment, this disclosure describes that the user input is selection of at least one of a number of cups of tea, a strength of the tea, and milkiness of the tea, wherein the strength of the tea is based on the steeping time, wherein the strength of the tea is one of light or strong, and wherein the milkiness of the tea is based on a volumetric ratio of milk and water.

According to the first aspect of an embodiment, this disclosure describes that the control unit is configured to control the inductive heating unit to steep the tea powder and the at least one of milk and water for the steeping time based on the selected strength of the tea.

According to the first aspect of an embodiment, this disclosure describes that the pumping unit is configured to pump the at least one of milk and water from at least one jug docked in the automatic tea brewing machine, and wherein the at least one of milk and water is pumped from the jug using at least one peristaltic motor through a metal piping.

According to the first aspect of an embodiment, this disclosure describes that the control system is configured to control the user interface panel to display a message based on a volume of the at least one of milk and water left in the at least one jug; and control the pumping unit to pump the at least one of milk and water based on a predetermined volume of the at least one of milk and water left in the at least one jug or based on a communication with a load cell under the at least one jug.

According to the first aspect of an embodiment, this disclosure describes that the pod breaking unit comprises a sliding mechanism on which a needle nozzle is mounted, wherein the water is pumped at a high pressure activating the sliding mechanism, and wherein the needle nozzle pierces top foil of the pod thereby controlling pumping of the water, through the needle nozzle, and the tea powder in the pod.

According to the first aspect of an embodiment, this disclosure describes that the control system is configured to detect presence of the carafe and thereby operate the automatic tea brewing machine only if the carafe is detected and wherein the steeping time is calculated from a time when the tea brewing reaches a boiling temperature, and wherein the steeping of the tea is stopped and heating the carafe is reduced, based on the steeping time reaching a threshold value, thereby keeping the tea warm till the carafe is removed.

According to a second aspect of an embodiment, this disclosure describes that a control unit controls a user interface panel to receive a user input, pumps at least one of milk and water based on the received user input, receives water and tea powder from a pod by a carafe when the pod breaks, wherein the pod is filled with tea powder, wherein bottom of the pod is designed to break based on a threshold pressure corresponding to an amount of water that gets filled in the pod, and wherein the carafe has ferromagnetic bottom, provides, by an inductive heating unit, inductive heat to the carafe, and controls the inductive heating unit to steep the tea powder, holded by an infusion mesh, and the at least one of milk and water for a steeping time based on the received user input, wherein the infusion mesh holds the tea powder in contact with the at least one of the milk and water.

According to the second aspect of an embodiment, this disclosure describes that the user input is selection of at least one of a number of cups of tea, a strength of the tea, and milkiness of the tea, wherein the strength of the tea is based on the steeping time, wherein the strength of the tea is one of light or strong, and wherein the milkiness of the tea is based on a volumetric ratio of milk and water.

According to the second aspect of an embodiment, this disclosure describes controlling, by the control unit, the inductive heating unit to steep the tea powder and the at least one of milk and water for the steeping time based on the selected strength of the tea.

According to the second aspect of an embodiment, this disclosure describes controlling, by the control unit, pumping of the at least one of milk and water from at least one jug docked in the automatic tea brewing machine, and wherein the at least one of milk and water is pumped from the jug using at least one peristaltic motor through a metal piping.

According to the second aspect of an embodiment, this disclosure describes controlling, by the control unit, the user interface panel to display a message based on a volume of the at least one of milk and water left in the at least one jug and controlling, by the control unit, the pumping unit to pump the at least one of milk and water based on a predetermined volume of the at least one of milk and water left in the at least one jug or based on a communication with a load cell under the at least one jug.

According to the second aspect of an embodiment, this disclosure describes that the pumping of the water is at a high pressure thereby activating a sliding mechanism, and wherein a needle nozzle, mounted on the sliding mechanism, pierces top foil of the pod thereby controlling the pumping of the water, through the needle nozzle, and the tea powder in the pod.

According to the second aspect of an embodiment, this disclosure describes detecting, by the control unit, presence of the carafe and thereby operate the automatic tea brewing machine only if the carafe is detected, wherein the steeping time is calculated from a time when the tea brewing reaches a boiling temperature, and wherein the steeping of the tea is stopped and heating the carafe is reduced, based on the steeping time reaching a threshold value, thereby keeping the tea warm till the carafe is removed.

According to a third aspect of an embodiment, this disclosure describes an automatic tea brewing system, comprising a tea brewing machine and at least two jugs for storing milk and water separately, wherein the at least two jugs are designed to be docked in the tea brewing machine, wherein the tea brewing machine comprises a user interface panel configured to receive a user input, a pumping unit configured to pump at least one of milk and water based on the received user input a pod breaking unit that comprises a pod filled with tea powder, wherein bottom of the pod is designed to break based on a threshold pressure corresponding to an amount of water that gets filled in the pod, and a carafe configured to receive the water and the tea powder from the pod when the pod breaks, wherein the carafe has ferromagnetic bottom; an inductive heating unit configured to provide inductive heat to the carafe, an infusion mesh configured to hold the tea powder in contact with the at least one of the milk and water, and a control unit configured to control the inductive heating unit to steep the tea powder, holded by the infusion mesh, and the at least one of milk and water for a steeping time based on the received user input.

Effects and features of the second through third aspects are to a large extent analogous to those described above in connection with the first aspect. Embodiments mentioned in relation to the first aspect are largely compatible with the second aspect through third aspect.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

The present disclosure will become apparent from the detailed description given below. These and other aspects of the embodiments and other objects and advantages of the present invention herein will be better appreciated and understood when considered in conjunction with the following description and the accompanying drawings. The accompanying drawings are incorporated for illustration of preferred embodiments of the present invention and are not intended to limit the scope thereof. It should be understood, however, that the following descriptions, while indicating preferred embodiments and numerous specific details thereof, are given by way of illustration and not of limitation. Different configuration changes and modifications may be made within the scope of the embodiments herein without departing from the spirit thereof, and the embodiments herein include all such modifications.

### BRIEF DESCRIPTION OF DRAWINGS

The detailed description is set forth with reference to the accompanying figures. In the figures, the left-most digit(s) of a reference number identifies the figure in which the reference number first appears. The use of the same reference numbers in different figures indicates similar or identical items.
Fig.1 illustrates a front perspective view of an automatic tea brewing machine, according to an embodiment herein;
Fig.2 illustrates a sectional view of an automatic tea brewing machine, according to an embodiment herein;
Fig.3 illustrates a back view of an automatic tea brewing machine, according to an embodiment herein;
Fig.4 illustrates a schematic diagram of an automatic tea brewing system, according to a first aspect of an embodiment herein; and
Fig. 5 illustrates a method for brewing tea using an automatic tea brewing machine, according to a second aspect of an embodiment herein.

### DETAILED DESCRIPTION OF THE PREFERRED EMBODIMENTS

The embodiments herein and the various features and advantageous details thereof are explained more fully with reference to the non-limiting embodiments and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

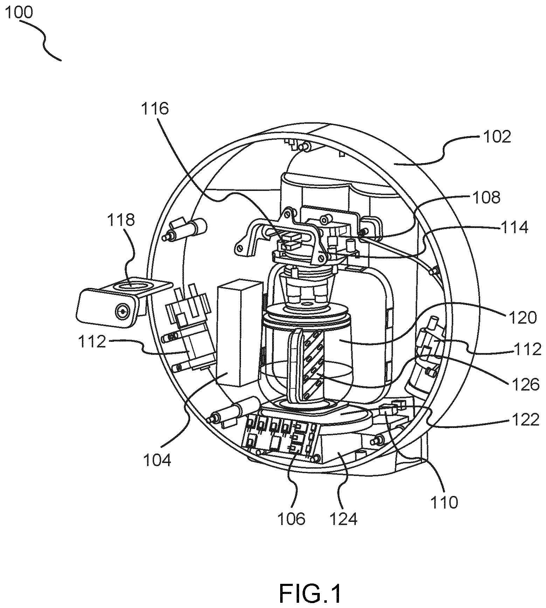

As mentioned above, there is a need for an automatic tea brewing machine having good aesthetics, brewing milk, water and tea together to resemble the traditional method, while preserving the aroma and taste of the tea and not requiring human intervention. The embodiments herein achieve this by providing an automatic tea brewing machine that is automated right from the moment the pod is placed to the end of the tea making process along with controlled steeping. Referring now to the drawings, and more particularly to FIGS. 1 through 5, where similar reference characters denote corresponding features consistently throughout the figures, there are shown preferred embodiments.

Fig.1 illustrates an exemplary embodiment of front view 100 of an automatic tea brewing machine 102, according to a first aspect of an embodiment. According to the first aspect of an embodiment, the automatic tea brewing machine 102 comprises a user interface panel 106, a pumping unit (not shown), a pod breaking unit 108, an inductive heating unit, an infusion control unit (not shown) that includes an infusion mesh, and a control unit. A power supply unit 104 is positioned appropriately inside the automatic tea brewing machine 102 (near to centre of the automatic tea brewing machine) to electrically connect the user interface panel 106, the pumping unit (not shown), the pod breaking unit 108, the inductive heating unit and the infusion control unit . The pumping unit (not shown), the pod breaking unit 108, the inductive heating unit and the infusion control unit are electrically connected to the user interface panel 106. The user interface panel 106 may be placed at a bottom of the automatic tea brewing machine 102. The power supply unit could be a Switched Mode Power Supply (SMPS) 104. The user interface panel 106 is configured to obtain input/information from a user regarding milkiness which is a ratio of milk and water (for example, 25%/ 50%/75%), strength of the tea (for example, light / strong) of tea decoction based on steeping time, number of cups of tea to be prepared (for example one cup or two cups). The larger the steeping time, stronger will be the tea. The user interface panel 106 could be a cap-sense touch module. Further, the control unit could be a processor configured to control various actions.

According to the first aspect of an embodiment, the power supply unit 104 is configured to supply a regulated power to the other elements of the automatic tea brewing machine 102. The control unit is in communication with peristaltic motors, load cells at bottom of the respective containers and two diaphragm pumps 112. The container for each milk and water are placed in the backside of the automatic tea brewing machine 102 and connected to the control unit using a plurality of inlet valves. The milk container and the water container are provided to supply milk and water according to a volumetric ratio obtained at the user interface panel 106. In case of insufficient volume, the control unit may raise an error message to the user interface panel 106. The peristaltic motors are configured to dispense milk and water at flow rates proportional to a speed of the peristaltic motors. The load cells are provided to measure the volume of the milk and water for preparing the tea. The user can also get a hot water alone as an option. The two diaphragm pumps 112 are placed at the circumference of the automatic tea brewing machine 102. The diaphragm pumps 112 are connected to the peristaltic motors for pumping liquid from each milk and water container. The control unit is configured to control a pumping of sufficient volume of milk and water based on selection obtained at the user interface panel 106.

The peristaltic motor or pump, is also commonly known as a roller pump, is a type of positive displacement pump used for pumping a variety of fluids. The fluid is contained in a flexible tube fitted inside a circular pump casing. Most peristaltic motors work through rotary motion, though linear peristaltic pumps have also been made. The peristaltic motor is part of a pumping unit for the milk, water, or any other fluid present in the automatic tea brewing machine 102.

According to the first aspect of an embodiment, the pod breaking unit 108 comprises a needle nozzle (not shown), a sliding mechanism 114, and a micro-switch 116. The pod breaking unit 108 is provided at the top centre of the automatic tea brewing machine 102 and is connected to the pumping volume controller 110. The needle nozzle is mounted on the sliding mechanism 114. The sliding mechanism 114 on which at least one needle nozzle is mounted gets activated, when the water gets pumped at high pressure. The at least one needle nozzle pierces a top foil of a pod that is placed on a pod holder 118, when the sliding mechanism 114 is activated. The water gets pumped through the needle nozzle and passes through a tea powder in the pod. The pod comprises a measurable quantity of tea powder with/ without flavours (ginger, cardamom, lemon, honey and the like). The measurable quantity of the tea powder is for either one cup or two cups of tea. The pod is specially designed to be structurally weak at a bottom. The bottom of the pod is designed to have a reduced thickness and the pod is made of a biodegradable material. The biodegradable material includes but are not limited to wood pulp paper, bioplastic/biopolymer and the like.

According to the first aspect of an embodiment, the pod gets filled with water from the control unit and the bottom of the pod breaks, when a pressure inside the pod crosses a threshold value. The water along with the tea powder from the pod pass through the bottom into a carafe 120. The micro-switch 116 is configured to detect a presence of the pod. The micro-switch 116 is further configured to validate necessary conditions for brewing the tea according to the obtained input (including but not limited to number of cups, required strength of tea and proportional volume of milk vs water) from the user interface panel 106. The necessary conditions include but are not limited to pressure and temperature of the water and milk, position of the carafe 120, position of the needle nozzle and so on. When the necessary conditions are not met, the control unit may raise an error message to the user interface panel 106. The user interface panel 106 is configured to provide both audio and visual feedback based on any user input or for raising errors and other messages related to tea preparation process status.

According to the first aspect of an embodiment, the inductive heating unit is provided behind the user interface panel 106 and at a lower end of the automatic tea brewing machine 102 to hold the carafe 120. Further, the inductive heating unit is not limited to be provided at behind and can be placed at any suitable location in the upper, lower , front, back, or like of the automatic tea brewing machine 102. The inductive heating unit comprises an induction coil 122 and an induction heating controller 124. The induction heating controller 124 is configured to detect a presence of the carafe 120 and activate the induction coil 122 to heat the carafe 120 inductively, when the carafe 120 is detected. A bottom of the carafe 120 is made of a ferromagnetic material that can be inductively heated by the inductive heating unit. When the necessary conditions are not met, then the inductive heating unit is not activated.

According to the first aspect of an embodiment, the infusion control unit is attached to the pod breaking unit 108 and the carafe 120. The infusion control unit comprises an infusion mesh 126 and an infusion controller (not shown). The infusion controller is configured to control the infusion mesh 126 to hold inside the tea powder and make the infusion mesh (126 to be in contact with the milk and water. The infusion controller (not shown) is an electromechanical system. The infusion mesh 126 is specially designed to prevent the tea powder from getting into the tea/ tea decoction. The infusion controller is further configured to control the infusion mesh 126 to cut off a steeping process to ensure a strength of tea according to the input from the user. A steeping time is calculated from a time, when the boiling temperature of the water is reached. When the steeping time is met, the steeping process is stopped and heating is reduced to keep the tea warm till the user removes the carafe 120. The user interface panel 106 is further configured to alert the user with audible and visual feedback. Residuals are collected in a separate container for easy disposal. The control unit is configured to control the inductive heating unit to steep the tea powder and the at least one of milk and water for the steeping time which is based on the selected strength of the tea on the user interface panel 106. Steeping time for a strong tea could be greater than a steeping time of a comparatively light tea.

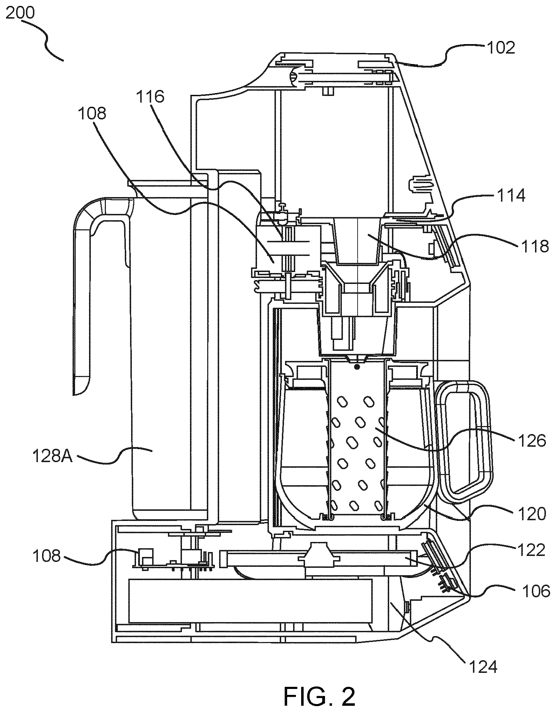

Fig.2 illustrates a cross sectional view 200 of an automatic tea brewing machine 102, according to a first aspect of an embodiment. FIG. 2 specifically shows a milk container 128A of the automatic tea brewing machine 102. The required quantity of the milk is pumped from the milk container 128A to brew the tea along with the tea powder that is burst out from the pod.

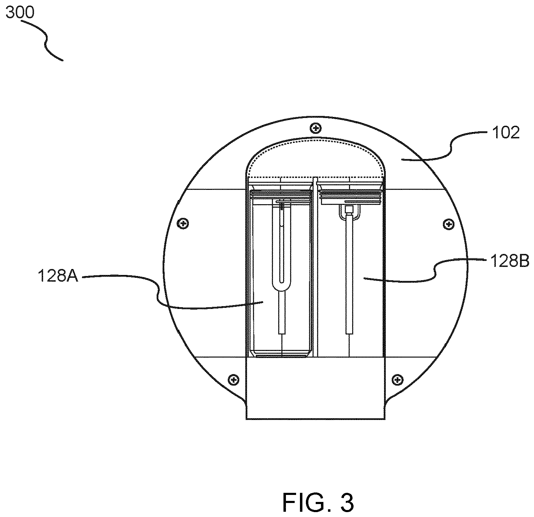

Fig.3 illustrates a back view 300 of an automatic tea brewing machine 102, according to a first aspect of an embodiment. According to the first aspect of an embodiment, a milk container 128A and a water container 128B are separately provided in the backside of the automatic tea brewing machine 102. The containers for each milk and water are detachable from the automatic tea brewing machine 102 for cleaning refilling and refrigeration purposes. Further, the milk container 128A and the water container 128B are provided with a suction pipe for each and the suction pipes are directly connected to a pumping unit (not shown in fig.3) of the automatic tea brewing machine 102, without any additional connectors. Peristaltic motors and metal piping is used for pumping the milk and water.

According to the first aspect of an embodiment, the automatic tea brewing machine 102 can be programmed to make black tea which is tea without milk, only milk that is without water or tea powder, or to dispense merely hot water which is without milk or tea powder. A commercial version of the automatic tea brewing machine 102 can be upgraded with larger output capability.

According to the first aspect of an embodiment, the pods with different flavours and powders can be used to make other beverages such as coffee, hot chocolate, ginger tea, lemon tea, green tea, or a combination of these, and so on. According to the first aspect of an embodiment, an Internet of Things (IOT) integration with virtual assistant technology such as Apple Siri^{™}, Amazon Alexa^{™} or Google Home ^{™} can be done to start the automatic tea brewing machine 102, make tea remotely and get updates or status on a mobile/wireless device/electronic communication device of a user when a tea brewing process is completed.

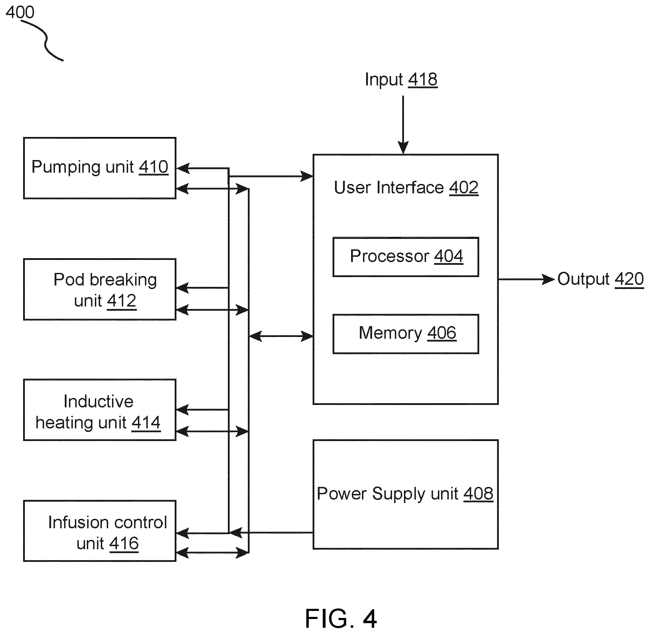

Fig.4 illustrates a schematic diagram of an automatic tea brewing system 400, according to a second aspect of an embodiment. The automatic tea brewing system 400 comprises a user interface panel 402, a control unit, a power supply unit 408, a pumping unit 410, a pod breaking unit 412, an inductive heating unit 414 and an infusion control unit 416 comprising an infusion mesh. Features that are described in reference with Figs. 1-3 and are not repeated for the sake of brevity. The power supply unit 408 is configured to supply a regulated power to the user interface panel 402, the pumping unit 410, the pod breaking unit 412, the inductive heating unit 414 and the infusion control unit 416. The control unit is configured to control the user interface panel 402, the pumping unit 410, the pod breaking unit 412, the inductive heating unit 414, and the infusion control unit 416.

According to the second aspect of an embodiment, the user interface 402 is configured to obtain input/information 418 from a user regarding number of cups required, milkiness of the tea which is a ratio of milk and water, and a strength of tea decoction which depends on a time for which the tea has been brewed. The user interface 402 comprises the processor 404 and a memory 406. The pumping unit 410 comprises a milk container and a water container, a pumping volume controller, peristaltic motors, load cells and two diaphragm pumps. The pumping unit 410 is electrically connected to the user interface 402. The control unit could be the processor 404.

According to the second aspect of an embodiment, the milk container and the water container are provided to supply milk and water according to a volumetric ratio obtained at the user interface 402. The control unit is configured to control a pumping of sufficient volume of milk and water obtained at the user interface 402. The peristaltic motors are configured to dispense milk and water at flow rates proportional to a speed of the peristaltic motors. The load cells (not shown) are provided to measure the volume of the milk and water for preparing the tea. The load cells are installed on the milk containers or water containers, preferably at the bottom of the container.

According to the second aspect of an embodiment, the pod breaking unit 412 comprises a needle nozzle, a sliding mechanism, and a micro-switch. The pod breaking unit 412 is electrically connected to the user interface 402 and the pumping unit 410. The needle nozzle is mounted on the sliding mechanism. The sliding mechanism on which at least one needle nozzle is mounted gets activated, when the water gets pumped at high pressure. When the sliding mechanism is activated, the at least one needle nozzle pierces a top foil of a pod that is placed on a pod holder. The water gets pumped through the needle nozzle and passes through a tea powder present in the pod.

According to the second aspect of an embodiment, the pod gets filled with water from the pumping unit 410 and the bottom of the pod breaks, when a pressure inside the pod crosses a threshold value. This pressure is because of the presence of the amount of water being filled in the pod. The water along with a tea powder from the pod pass through the bottom into a carafe after the pod breaks. The micro-switch is configured to detect the presence of the pod. The micro-switch is further configured to validate necessary conditions for brewing the tea according to the obtained input (including but not limited to number of cups, required strength of tea and proportional volume of milk vs water) from the user interface panel 402.

According to the second aspect of an embodiment, the inductive heating unit 414 comprises an induction coil and an induction heating controller. The induction heating controller is configured to activate the induction coil to heat the carafe inductively. A bottom of the carafe is made of a ferromagnetic material that can be inductively heated by the inductive heating unit 414. The induction heating controller is further configured to detect a presence of the carafe and activate the induction heating, when the carafe is detected. When the necessary conditions are not met, then the inductive heating unit is not activated. The induction heating can also be controlled using the processor or the control unit.

According to the second aspect of an embodiment, the infusion control unit 416 comprises an infusion mesh and an infusion controller. The infusion controller is configured to control the infusion mesh to hold inside the tea powder and make the infusion mesh to be in contact with the milk and water. The infusion controller is further configured to control the infusion mesh to cut off a steeping process to ensure a strength of tea according to the input from the user. A steeping time is calculated from a time, when the boiling temperature of the water is reached. When the steeping time is met, the steeping process is stopped and heating is reduced to keep the tea warm till the user removes the carafe. The user interface 402 is further configured to alert the user with audible and visual feedback, when the output/tea 420 is ready for serving. The infusion mesh and the steeping time can also be controlled using the processor or the control unit. The steeping time can also be controlled using a specific timer.

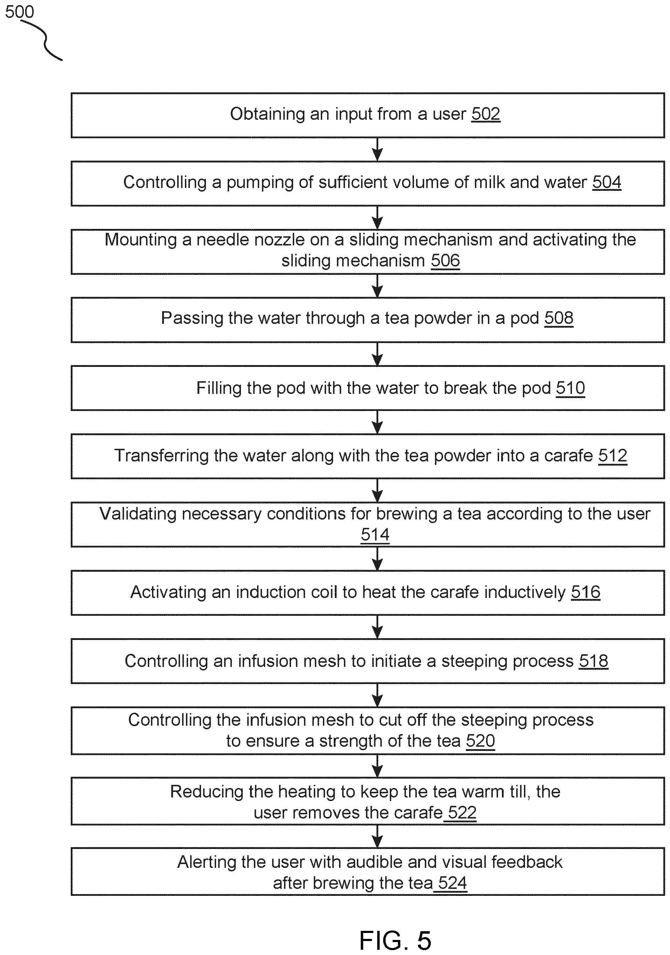

Fig. 5 illustrates a method 500 for brewing tea using an automatic tea brewing machine, according to a third aspect of an embodiment. The method that is illustrated in Fig. 5, as a collection of operations in a logical flow graph representing a sequence of operations that can be implemented in hardware, software, firmware, or a combination thereof. The order in which the methods are described is not intended to be construed as a limitation, and any number of the described method blocks can be combined in any order to implement the methods, or alternate methods. Additionally, individual operations may be deleted from the methods without departing from the scope of the subject matter described herein. In the context of software, the operations represent computer instructions that, when executed by one or more processors, perform the recited operations. Features that are described in reference with Figs. 1-3 and are not repeated for the sake of brevity.

According to a third aspect of an embodiment, the method 500 for brewing tea using an automatic tea brewing machine comprising the steps of:
At step 502, obtaining an input/information from a user regarding the number of cups required, milkiness of tea which is a ratio of milk and water and strength of tea decoction; supplying milk and water according to a volumetric ratio obtained at the user interface panel;
At step 504, controlling a pumping of sufficient volume of milk and water obtained at the user interface; and dispensing milk and water at flow rates proportional to a speed of peristaltic motors. The volume of milk depends on the selected milkiness of the tea. More the milkiness, more will be the quantity of the milk. Stronger the tea, more will be the brewing time of the tea.
At step 506, mounting a needle nozzle on a sliding mechanism and activating the sliding mechanism on which at least one needle nozzle is mounted, when the water gets pumped at high pressure; Water and tea powder is received from a pod by a carafe when the pod breaks. When the sliding mechanism is activated, piercing a top foil of the pod that is placed on a pod holder using the at least one needle nozzle. The pod comprises a measurable quantity of tea powder with/ without flavours (ginger, cardamom, lemon, honey, or a combination thereof, and the like). The measurable quantity of the tea powder is for either one cup or two cups of tea. The pod is specially designed to be structurally weak at a bottom. The bottom of the pod is designed to have a reduced thickness and the pod is made of a biodegradable material. The biodegradable material includes but are not limited to wood pulp paper, bioplastic/biopolymer and the like. The carafe has ferromagnetic bottom
At step 508, passing the water that is pumped through the needle nozzle, through the tea powder in the pod;
At step 510, filing the pod with water thereby to break a bottom of the pod, when a pressure inside the pod crosses a threshold value;
At step 512, transferring the water along with the tea powder from the pod through the bottom into a carafe; pumping a required quantity of the milk from the milk container to brew the tea along with the tea powder that is burst out from the pod;
At step 514, detecting a presence of the pod and validating necessary conditions for brewing the tea according to the obtained input (including but not limited to number of cups, required strength of tea and proportional volume of milk vs water) from the user; raising an error message to the user, when the necessary conditions are not met;
At step 516, activating an induction coil to heat the carafe inductively, when a presence of the carafe is detected;
At step 518, controlling an infusion mesh to hold inside the tea powder and making the infusion mesh to be in contact with the milk and water to initiate a steeping process;
At step 520, controlling the infusion mesh to cut off a steeping process to ensure a strength of tea according to the input from the user; stopping the steeping process, when the steeping time is met. The inductive heating unit steeps the tea powder, holded by an infusion mesh, and the at least one of milk and water for a steeping time based on the received user input, where the infusion mesh holds the tea powder in contact with the at least one of the milk and water
At step 522, reducing the heating to keep the tea warm, till the user removes the carafe; and
At step 524, alerting the user with audible and visual feedback.

Advantages of the embodiment herein provides users an ability to make tea (chai) with a touch of a few buttons in a comfort of their home, without any manual/ human intervention. The automatic tea brewing machine can also keep a check on steeping time, thus preventing the tea from becoming bitter and/or too strong due to over-steeping and can avoid spillages as is typical in the traditional method. The automatic tea brewing machine uses an inductive heating which increases the safety while making the tea since the machine body can be touched while in operation. Inductive heating also ensures that the tea is made in the shortest time span with an efficient use of energy since it does not have any open flame. The product also elevates aesthetics of a room/ home environment in which it is placed and can be a conversation starter.

The foregoing description of the specific embodiments will so fully reveal the general nature of the embodiments herein that a person skilled in the art can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as described herein.

### LIST OF REFERENCES

100, 200, 300 - front, sectional and back view of an automatic tea brewing machine respectively
102 - an automatic tea brewing machine
104 - a power supply unit or Switched Mode Power Supply (SMPS)
106 - a user interface
108 - a pod breaking unit
110- a pumping volume controller
112 - diaphragm pumps
114 - a sliding mechanism
116 - a micro-switch
118 - a pod holder
120 - a carafe
122 - an induction coil
124 - an induction heating controller
126 - an infusion mesh
128A - a milk container
128B - a water container
400- an automatic tea brewing system
402- a user interface
404 - Processor
406 - memory
408 - a power supply unit
410 - a pumping unit
412 - a pod breaking unit
414 - an inductive heating unit
416 - an Infusion control unit
418 - Input
420 - Output
502-524 - steps of a method for brewing tea using an automatic tea brewing machine

## Claims

1. An automatic tea brewing machine (102), comprising:
a user interface panel (106) configured to receive a user input;
a pumping unit configured to pump at least one of milk and water based on the received user input;
a pod breaking unit (108) that comprises :
a pod filled with tea powder, wherein bottom of the pod is designed to break based on a threshold pressure corresponding to an amount of water that gets filled in the pod; and
a carafe (120) configured to receive the water and the tea powder from the pod when the pod breaks, wherein the carafe has ferromagnetic bottom;
an inductive heating unit (122, 124) configured to provide inductive heat to the carafe;
an infusion mesh (126) configured to hold the tea powder in contact with the at least one of the milk and water; and
a control unit configured to control the inductive heating unit (122) to steep the tea powder, on hold of the infusion mesh (126), and the at least one of milk and water for a steeping time based on the received user input.

2. The automatic tea brewing machine (102) according to claim 1, wherein the user input is selection of at least one of a number of cups of tea, a strength of the tea, and milkiness of the tea, wherein the strength of the tea is based on the steeping time, wherein the strength of the tea is one of light or strong, and wherein the milkiness of the tea is based on a volumetric ratio of milk and water.

3. The automatic tea brewing machine (102) according to claim 2, wherein the control unit further configured to control the inductive heating unit (122) to steep the tea powder and the at least one of milk and water for the steeping time based on the selected strength of the tea.

4. The automatic tea brewing machine (102) according to any of the preceding claims, wherein the pumping unit is further configured to pump the at least one of milk and water from at least one jug docked in the automatic tea brewing machine, and wherein the at least one of milk and water is pumped from the jug using at least one peristaltic motor through a metal piping.

5. The automatic tea brewing machine (102) according to claim any of the preceding claims, wherein the control system is further configured to:
control the user interface panel (106) to display a message based on a volume of the at least one of milk and water left in the at least one jug; and
control the pumping unit to pump the at least one of milk and water based on a predetermined volume of the at least one of milk and water left in the at least one jug or based on a communication with a load cell under the at least one jug.

6. The automatic tea brewing machine (102) according to any of the preceding claims, wherein the pod breaking unit further comprises a sliding mechanism (114) on which a needle nozzle is mounted, wherein the water is pumped at a high pressure activating the sliding mechanism, and wherein the needle nozzle pierces top foil of the pod thereby controlling pumping of the water, through the needle nozzle, and the tea powder in the pod.

7. The automatic tea brewing machine (102) according to any of the preceding claims, wherein the control system is further configured to detect presence of the carafe (120) and thereby operate the automatic tea brewing machine only if the carafe is detected, and wherein the steeping time is calculated from a time when the tea brewing reaches a boiling temperature, and wherein the steeping of the tea is stopped and heating the carafe is reduced, based on the steeping time reaching a threshold value, thereby keeping the tea warm till the carafe (120) is removed.

8. A method (500) of automatic tea brewing, the method (500) comprising:
controlling, by a control unit, a user interface panel to receive (502) a user input;
controlling, by the control unit, pumping (504) of at least one of milk and water based on the received user input;
controlling, by the control unit, receiving (512) of water and tea powder from a pod by a carafe when the pod breaks, wherein the pod is filled with tea powder, wherein bottom of the pod is designed to break based on a threshold pressure corresponding to an amount of water that gets filled in the pod, and wherein the carafe has ferromagnetic bottom;
controlling, by the control unit, an inductive heating unit to provide inductive heat (516) to the carafe; and
controlling, by the control unit, the inductive heating unit to steep the tea powder, holded by an infusion mesh, and the at least one of milk and water for a steeping time based on the received user input, wherein the infusion mesh holds the tea powder in contact with the at least one of the milk and water.

9. The method (500) according to claim 9, wherein the user input is selection of at least one of a number of cups of tea, a strength of the tea, and milkiness of the tea, wherein the strength of the tea is based on the steeping time, wherein the strength of the tea is one of light or strong, and wherein the milkiness of the tea is based on a volumetric ratio of milk and water.

10. The method (500) according to claim 10, further comprising controlling, by the control unit, the inductive heating unit to steep the tea powder and the at least one of milk and water for the steeping time based on the selected strength of the tea.

11. The method (500) according to any of the preceding claims, further comprising controlling, by the control unit, pumping of the at least one of milk and water from at least one jug docked in the automatic tea brewing machine, and wherein the at least one of milk and water is pumped from the jug using at least one peristaltic motor through a metal piping.

12. The method (500) according to claim any of the preceding claims, further comprising:
controlling, by the control unit, the user interface panel to display a message (524) based on a volume of the at least one of milk and water left in the at least one jug; and
controlling, by the control unit, the pumping unit to pump (504) the at least one of milk and water based on a predetermined volume of the at least one of milk and water left in the at least one jug or based on a communication with a load cell under the at least one jug.

13. The method (500) according to any of the preceding claims, wherein the pumping of the water is at a high pressure thereby activating a sliding mechanism, and wherein a needle nozzle, mounted on the sliding mechanism, pierces top foil of the pod thereby controlling the pumping of the water, through the needle nozzle, and the tea powder in the pod.

14. The method (500) according to any of the preceding claims, further comprising, detecting, by the control unit, presence of the carafe and thereby operate the automatic tea brewing machine only if the carafe is detected, wherein the steeping time is calculated from a time when the tea brewing reaches a boiling temperature, and wherein the steeping of the tea is stopped and heating the carafe is reduced, based on the steeping time reaching a threshold value, thereby keeping the tea warm till the carafe is removed.

15. An automatic tea brewing system (400), comprising:
a tea brewing machine; and
at least two jugs for storing milk and water separately, wherein the at least two jugs are designed to be docked in the tea brewing machine,
wherein the tea brewing machine comprises:
a user interface panel (402) configured to receive a user input;
a pumping unit (410) configured to pump at least one of milk and water based on the received user input;
a pod breaking unit (412) that comprises :
a pod filled with tea powder, wherein bottom of the pod is designed to break based on a threshold pressure corresponding to an amount of water that gets filled in the pod; and
a carafe configured to receive the water and the tea powder from the pod when the pod breaks, wherein the carafe has ferromagnetic bottom;
an inductive heating unit (414) configured to provide inductive heat to the carafe;
an infusion mesh configured to hold the tea powder in contact with the at least one of the milk and water; and
a control unit configured to control the inductive heating unit to steep the tea powder, in hold of the infusion mesh, and the at least one of milk and water for a steeping time based on the received user input.
